(19) Europäisches Patentamt
European Patent Office
Office européen des brevets

(11) **EP 2 907 130 B1**

(12) **FASCICULE DE BREVET EUROPEEN**

(45) Date de publication et mention
de la délivrance du brevet:
**22.03.2017 Bulletin 2017/12**

(21) Numéro de dépôt: **13783877.7**

(22) Date de dépôt: **15.10.2013**

(51) Int Cl.:
***G10H 1/34*** *(2006.01)*

(86) Numéro de dépôt international:
**PCT/EP2013/071547**

(87) Numéro de publication internationale:
**WO 2014/060428 (24.04.2014 Gazette 2014/17)**

(54) **CONTROLEUR HAPTIQUE ADAPTE POUR LE CONTROLE D'UNE CARACTERISTIQUE SONORE**

HAPTISCHES STEUERGERÄT ZUR STEUERUNG EINES TONMERKMALS

HAPTIC CONTROLLER FOR CONTROLLING A SOUND CHARACTERISTIC

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.10.2012 FR 1259831**

(43) Date de publication de la demande:
**19.08.2015 Bulletin 2015/34**

(73) Titulaires:
• **Université Pierre et Marie Curie (Paris 6)**
**75005 Paris (FR)**
• **Centre National de la Recherche Scientifique**
**75016 Paris (FR)**

(72) Inventeurs:
• **QUARTIER, Laurent**
**F-75013 Paris (FR)**

• **SIMON, Eric**
**F-50570 Marigny (FR)**

(74) Mandataire: **Parzy, Benjamin Alain**
**Cabinet Boettcher**
**16, rue Médéric**
**75017 Paris (FR)**

(56) Documents cités:
GB-A- 1 573 233        JP-A- H04 350 697
JP-A- H06 175 649      JP-A- 2009 236 967
JP-U- S52 154 230      US-A- 3 045 522
US-A- 3 558 793        US-A- 4 351 222
US-A1- 2005 160 903    US-A1- 2008 141 847
US-A1- 2010 175 545    US-A1- 2011 061 518
US-B1- 7 045 701

# Description

L'invention est relative à un contrôleur haptique comportant un organe de manoeuvre pouvant être manoeuvré par l'utilisateur, par exemple une touche pouvant être enfoncée par le doigt, utilisable notamment pour contrôler au moins une caractéristique sonore d'un instrument de musique.

## ARRIERE-PLAN TECHNOLOGIQUE DE L'INVENTION

Sur les synthétiseurs ou tout autre dispositif électronique de génération de son, il est courant de disposer d'un ou plusieurs contrôleurs haptiques pour permettre à l'instrumentiste de contrôler divers caractéristiques du son généré, telles que son volume, son vibrato, sa dynamique...

Par exemple, on connaît les pédales de volume des orgues à roues électromécaniques, ou encore la pédale de volume de marque BOSS EV5 à interface MIDI que l'on peut associer à un synthétiseur. En général, ces pédales ou contrôleurs haptiques au pied sont pourvus d'un potentiomètre dont la sortie est numérisée pour générer un signal proportionnel à l'enfoncement de la pédale.

Sur les instruments de type ondes Martenot, on trouve une touche dite touche d'intensité ou touche d'expression permettant de contrôler le volume du son généré par l'instrument. De façon connue en soi, la touche est montée en levier de sorte qu'une pression sur la touche provoque l'écrasement d'un sac de poudre conductrice par lequel transite le signal électrique porteur du son. L'écrasement du sac provoque une modification de la résistivité de la poudre, et, partant, une modification de l'amplitude du son. L'utilisation d'un tel sac permet une relation entre l'effort appliqué sur la touche et l'amplitude du son très proche de la perception psycho-physiologique du musicien.

Cependant, une telle réalisation est délicate à mettre en oeuvre, et il apparaît que le sac de poudre est difficilement reproductible et complexe à mettre en oeuvre en pratique. Par ailleurs, ce dispositif est uniquement analogique et n'est pas adapté à une utilisation en tant que contrôleur haptique pour des instruments modernes.

La demande de brevet US2011/0061518 divulgue un contrôleur haptique à force de réaction non-linéaire utilisé comme pédale de piano numérique, ladite force de réaction étant générée par compression d'une butée en caoutchouc déformable en forme de dôme.

## OBJET DE L'INVENTION

L'invention a pour objet de proposer un contrôleur haptique qui permet une finesse du contrôle tout en permettant son utilisation avec des appareils modernes, tels qu'un séquenceur MIDI, un logiciel de Musique Assistée par Ordinateur ou encore un contrôleur numérique pour le montage vidéo.

## PRESENTATION DE L'INVENTION

A cet effet, on propose un contrôleur haptique comportant :

- une base,
- au moins un organe de manoeuvre monté mobile sur la base pour être déplaçable sous l'action d'un utilisateur,
- des moyens de liaison mécanique comportant au moins une butée déformable en matériau élastomère disposés entre l'organe de manoeuvre et la base et adaptés à exercer un effort résistant non-linéaire monotone à l'encontre d'un effort d'actionnement de l'organe de manoeuvre,
- au moins un capteur placé dans le contrôleur haptique de façon à générer un signal représentatif dudit effort d'actionnement,
- des moyens opérationnellement associés de traitement du signal généré par le capteur, intégrés ou déportés par rapport au contrôleur, pour délivrer un signal de sortie pour contrôler au moins une caractéristique d'un son.

Le caractère non-linéaire monotone de l'effort résistant vise à améliorer la perception sensorielle de l'utilisateur lors de la manipulation de l'organe de manoeuvre. Ainsi, l'utilisateur ressent un effort résistant croissant de façon non-linéaire conforme à un ressenti physiologique, permettant ainsi un contrôle précis de la caractéristique sonore. La génération du signal et son traitement rendent le contrôleur haptique apte à être interfacé avec un générateur de son. Le signal de sortie peut alors être utilisé pour contrôler un volume, une distorsion, un vibrato, ou tout autre caractéristique du son.

Les moyens de traitement pourront être physiquement intégrés dans le contrôleur haptique, de sorte à définir un contrôleur haptique autonome, avantageusement muni de moyens d'interfaçage à un appareil externe, tel qu'un séquenceur MIDI ou un synthétiseur pour fournir le signal de sortie. Les moyens de traitement pourront alternativement être déportés dans une unité de commande externe, par exemple dans l'instrument de musique auquel le contrôleur haptique de l'invention est relié. Le capteur pourra être par exemple être un capteur d'effort placé pour être sensible à l'effort de manoeuvre, ou encore un capteur de position traduisant le déplacement de l'organe de manoeuvre. Ce déplacement sera ensuite converti, au niveau des moyens de traitement placés à l'intérieur du dispositif, ou déportés, en effort appliqué sur l'organe de manoeuvre.

Il est bien sûr évident que lorsque l'on parle ici d'effort non linéaire, on vise des efforts non linéaires développés pendant une partie de la course opérationnelle de l'organe de manoeuvre, et non lors de la venue de l'organe de manoeuvre en butée en fin de course.

Selon un mode particulier de réalisation, l'organe de manoeuvre est une touche pouvant être enfoncée par le doigt de l'utilisateur.

De préférence alors, les moyens de liaison mécanique comprennent d'une part une lame flexible ayant une première extrémité encastrée sur la base et une deuxième extrémité portant la touche, et d'autre part une butée déformable contre laquelle vient buter la touche lors de son enfoncement.

PRESENTATION DES FIGURES

L'invention sera mieux comprise à la lumière de la description qui suit de modes de réalisation particuliers de l'invention, en référence aux figures des dessins annexés, parmi lesquelles :

- la figure 1 est une vue de côté d'un contrôleur haptique selon un premier mode particulier de réalisation de l'invention, dont l'organe de manoeuvre est une touche ;
- la figure 2 est une vue de dessus du contrôleur haptique de la figure 1 ;
- la figure 3 est une vue de côté d'un contrôleur haptique selon un deuxième mode particulier de réalisation de l'invention, l'électronique n'ayant pas été représentée ;
- la figure 4 est une vue en perspective d'une variante du contrôleur haptique de la figure 3, illustrant les trois usages de la touche pouvant être détectés et exploités ;
- la figure 5 est un graphe montrant l'effort résistant exercé par les moyens de liaison mécanique en fonction de l'enfoncement de la touche du contrôleur haptique de la figure 3 ;
- la figure 6 est une vue en bout de la butée déformable du contrôleur de la figure 1 ;
- les figures 7 à 10 sont des vues de côté de contrôleurs haptiques selon l'invention dont l'organe de manoeuvre est une pédale ;
- les figures 11 et 12 sont des vues en perpective coupée et de dessus de contrôleurs haptiques selon l'invention dont l'organe de manoeuvre est un manche ;
- la figure 13 est une vue schématique d'un contrôleur haptique selon l'invention dont l'organe de manoeuvre est un manche ;
- la figure 14 est une vue en perspective coupée d'un contrôleur haptique selon l'invention comportant plusieurs organes de manoeuvres formant un clavier ;
- Les figures 15 et 16 sont des vues de côté et en perspective d'un contrôleur haptique selon l'invention comportant plusieurs organes de manoeuvre sous forme de touches adjacentes.

DESCRIPTION DETAILLEE DE MODES DE REALISATION DE L'INVENTION

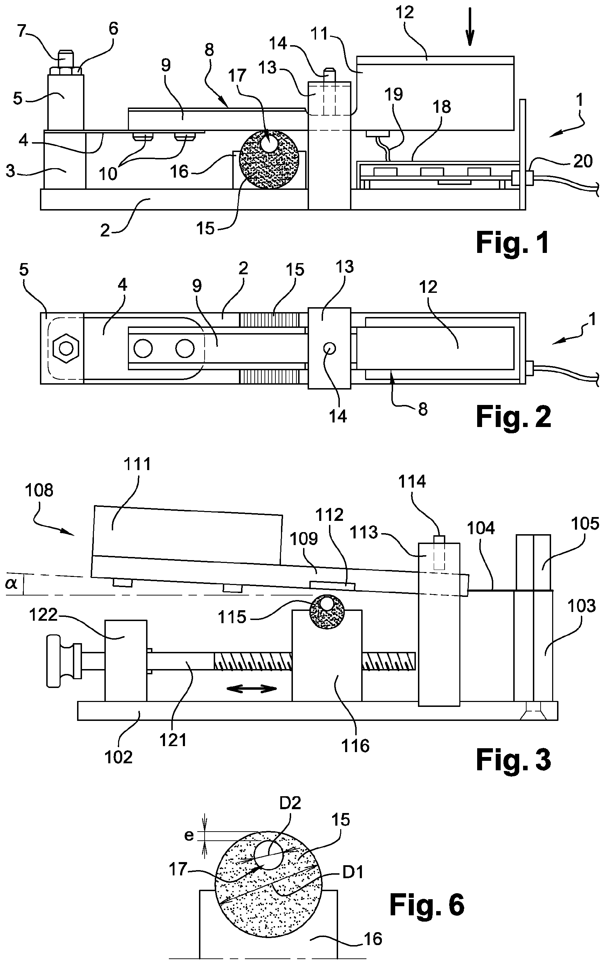

Selon un premier mode particulier de réalisation, et en référence aux figures 1 et 2, le contrôleur haptique 1 comporte une base 2 sur laquelle un support 3 est fixé. Une lame flexible 4 (par exemple une lame métallique) a une extrémité prise en sandwich entre le support 3 et une bride 5 rapportée sur le support 3 et serrée à l'aide d'un écrou 6 rapporté sur une vis de serrage 7. Sur l'autre extrémité de la lame flexible 4 est rapporté un organe de manoeuvre, en l'occurrence ici une touche 8 présentant une queue 9 fixée sur la lame flexible 4 à l'aide de vis 10. La queue 9 de la touche 8 est reliée à un massif 11 qui est directement manipulable par l'utilisateur en exerçant avec le doigt sur ledit massif un effort d'enfoncement selon la flèche de la figure. Un tel effort entraîne un déplacement de la touche vers le bas, provoquant le fléchissement de la lame flexible 4, induisant un effort résistant au déplacement de la touche 8.

Ici, un capteur d'effort 12 est placé sur la partie supérieure du massif 11 de la touche 8 pour être directement sensible à l'effort exercé par l'utilisateur. Bien évidemment, l'invention n'est pas limitée à l'utilisation d'un tel capteur d'effort. On peut également utiliser un capteur de position dont le signal est conditionné en relation avec le retour haptique induit par la déformation de la butée lors de l'enfoncement. Le capteur est disposé pour être sensible soit à l'effort exercé, soit au déplacement de l'organe de manoeuvre.

La queue 9 s'étend au travers d'un arceau 13 munie d'une vis réglable d'arrêt 14 qui agit sur la queue 9 pour limiter la course de la touche 8 vers le haut.

Par ailleurs, une butée déformable 15 (réalisée en matière déformable, telle que par exemple une matière élastomérique) est reçue dans un support 16 solidaire de la base 2 pour s'étendre sous la queue 9 de la touche 8 de sorte à être déformée par le déplacement de la touche 8 sous l'action de l'utilisateur, et d'exercer un effort résistant au déplacement de la touche 8. Ainsi, la touche 8 peut être enfoncée par l'utilisateur à l'encontre d'un effort résistant résultant de l'action de la lame flexible 4 et de la butée déformable 15. Plus précisément, et comme cela est illustré en détail à la figure 6, la butée déformable 15 a ici la forme d'un tronçon de cylindre circulaire de diamètre D1 dans lequel a été pratiqué un perçage 17 de diamètre D2 parallèle à l'axe central du cylindre, mais décalé (c'est-à-dire non coaxial) de sorte à laisser un écart e entre la surface extérieure du cylindre circulaire et le perçage. Ce perçage donne à l'effort résistant exercé par la butée un caractère non-linéaire monotone particulièrement utile. Il est évident qu'en jouant sur les trois paramètres D1,D2 et e, on modifie la réponse de la butée déformable à son écrasement par la touche.

Par exemple, s'agissant d'une touche de clavier des synthétiseur, cette butée déformable présente avantageusement un diamètre extérieur D1 de 50 millimètres au maximum, un perçage d'un diamètre intérieur D2 de 30 millimètres au maximum, le perçage étant décalé de sorte à présenter un écart e d'au maximum 5 millimètres du bord du cylindre. Il va de soi que le décalage mentionné ici va au-delà des simples tolérances de fabrication qui affecteraient un cylindre à perçage coaxial.

La butée déformable en forme de cylindre percé n'est qu'un exemple de réalisation de la butée en matériau élastomère. La butée déformable pourra être d'une autre forme, percée ou non, telle que rectangle, ogive, dôme, carrée, triangle, en forme de Z ou toutes autre forme réalisable du moment qu'elle induit un effort résistant non linéaire. De même, tout type de matériau élastomère pourra être utilisé, comme par exemple, un moulage d'élastomère à base de polyuréthane..

On remarquera que l'effort exercé par l'utilisateur est sensiblement égal à l'effort résistant, l'inertie de la touche 8 étant très faible. Ainsi, l'effort résistant que subit la touche 8 lors de son enfoncement, constitue un retour haptique pour l'utilisateur. Le signal généré par le capteur 12 est alors fourni à une unité de traitement 18 qui reçoit le signal du capteur via une liaison filaire 19, le conditionne, et l'envoie vers une sortie 20 (par exemple de type sortie MIDI). On notera que le signal du capteur est conditionné en relation avec le retour haptique induit par la déformation de la butée lors de l'enfoncement. De préférence, l'unité de traitement comporte un convertisseur analogique/numérique, un ou des micro-contrôleurs programmables permettant de paramétrer le traitement du signal, une mémoire non-volatile contenant les programmes pré-enregistrés pour la transformation des signaux numérisés du capteur, et le type de contrôle MIDI auquel ils sont affectés, une entré/sortie USB pour permettre l'implémentation des programmes dans la mémoire non-volatile.

Ainsi, le contrôleur haptique est apte à dialoguer en langage MIDI et être interfacé à tout appareil adapté à gérer ce langage, comme un synthétiseur, et il est bien sûr possible de l'affecter au contrôle de tout paramètre.

Selon un deuxième mode particulier de réalisation illustré à la figure 3, sur laquelle les références des éléments communs avec les figures 1 et 2 ont été augmentées d'une centaine, la butée déformable 115 est maintenue sur un support 116 qui est monté mobile axialement (selon la double flèche sur la figure). Le support 116 comporte un taraudage dans lequel est engagée une vis de réglage 121 montée tournante sur un palier 122 solidaire de la base 102. Il suffit de tourner la vis pour déplacer axialement le support 116 et donc la butée déformable 115, et ainsi modifier le point d'accostage de la touche 108 contre la butée déformable 115. Ceci permet de régler la relation entre l'enfoncement de la touche 108 et l'effort résistant subi par celle-ci. Ici, le capteur d'effort 112 a été placé sur la touche en regard de la butée déformable.

En pratique, on donnera typiquement à la touche 108 une course de quelques millimètres, en veillant à ce que la force résistante reste raisonnable, avec un maximum de l'ordre de quelques newtons.

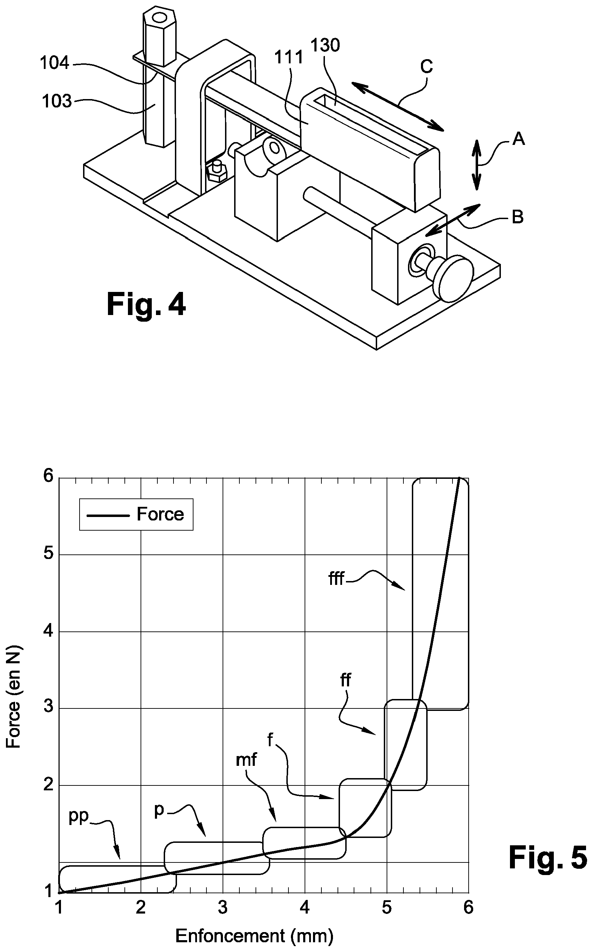

On peut voir à la figure 5 l'allure typique de l'effort résistant subi par la touche 108 du contrôleur haptique 101 lors de son enfoncement. Les valeurs données ci-dessous ne sont qu'indicatives. L'homme du métier comprendra facilement que l'allure générale de la courbe et les valeurs correspondantes d'enfoncement et d'effort peuvent varier dans de larges proportions selon la cinématique de la touche, la position de la butée déformable, la raideur de la lame et de la butée déformable...

Sur une première plage A correspondant aux premiers millimètres d'enfoncement (ici à peu près [0-1] mm), l'effort est insignifiant et n'a pas été représenté. Puis, sur une deuxième plage B (ici à peu près [1-4,5] mm), la touche n'a pas encore touché la butée déformable, de sorte que le seul effort résistant résulte de la lame flexible. Cet effort est sensiblement linéaire et présente une pente faible. Puis, au début d'une troisième plage C (ici à peu près [4,5-6] mm), la touche vient accoster la butée déformable. Celle-ci va donc commencer à développer un effort résistant qui se superpose à celui de la lame pour donner à la courbe d'effort une pente de plus en plus importante, avec un raidissement important dans la plage de 5 à 6 millimètres. On remarquera que la forme de la courbe évoque une variation logarithmique de l'enfoncement E avec l'effort résistant F.

Ce dispositif est conçu pour reproduire la courbe Effort-Enfoncement typique d'un doigt humain, appuyant sur une surface plane. Ainsi, la maîtrise de ce contrôleur par un néophyte est immédiate, puisqu'elle ne requiert pas l'apprentissage de nouveaux gestes. L'utilisateur possède intuitivement le niveau de finesse de contrôle nécessaire, permettant une utilisation musicale pointue.

D'autre part, cet accroissement non-linéaire monotone de l'effort résistant permet une finesse de contrôle importante, grâce aux dispositions maintenant détaillées. La loi de Weber-Fechner (ou de Bouguer-Weber) décrit la relation entre la sensation ressentie et la grandeur physique d'un stimulus. Selon cette loi, la sensation S perçue varie avec l'intensité I du stimulus selon la relation $S \propto \log(I)$.

Ainsi, si l'on veut contrôler finement la sensation de l'utilisateur (par exemple le niveau sonore du son émis exprimé en dB) relativement au stimulus (ici l'effort résistant à l'enfoncement de la touche), il convient dès lors de prévoir un traitement numérique du signal du capteur qui permet de relier la variation d'intensité du signal sonore (la dynamique sonore) à l'effort selon la relation $\Delta dB = k.\log(F)$, où k est une constante. Pour cela, on fera en sorte que le signal de sortie du contrôleur haptique de l'invention, $S_{out}$, soit proportionnel au logarithme de l'effort. C'est le rôle de l'unité de traitement 18,118 que d'assurer la génération d'un signal de sortie $S_{out}$ proportionnel au logarithme de l'effort résistant

Il est également possible d'utiliser des capteurs d'effort qui génèrent un signal directement proportionnel au logarithme de l'effort détecté, comme par exemple des capteurs d'effort de type FSR.

Ainsi, l'utilisateur a une perception physiologique intuitive de la relation entre l'effort d'actionnement qu'il applique sur la touche et la dynamique sonore, ce qui permet un contrôle très fin de la dynamique sonore.

On a figuré sur la figure 5 les différentes plages de volume commandables grâce au contrôleur haptique de l'invention, du pianissimo au fortississimo. De préférence, les plages de faible niveau sonore correspondent à une plage d'enfoncement plus importante que les plages de niveau sonore important.Pour encore améliorer la sensibilité liée à l'enfoncement de la touche, et selon un aspect particulier de l'invention, on applique une transformée en sigmoïde au logarithme de l'effort, c'est-à-dire que l'on utilise la transformation suivante

$$Sout \approx \frac{A}{1 + \exp\{-\lambda \times (\log(F) - x_0)\}}$$

où A, $\lambda$ et $x_0$ sont des paramètres de la sigmoïde qui sont de préférence choisis de telle sorte que :

- la plage utile du signal, qui représente la majeure partie de la courbe (centrée autour du point d'inflexion en $x_0$) s'étend selon une droite oblique, et permet donc la relation de proportionnalité entre $\Delta$dB et log(F). En particulier, on est en mesure d'agir sur la pente de la relation de proportionnalité (la pente vaut $\lambda$/4) : on dispose ainsi d'un moyen simple de régler la courbe de sensibilité de la touche ;
- la plage correspondant aux faibles forces et qui s'étend selon une asymptote horizontale permet de régler le niveau minimal de force pour déclencher l'effet de la touche ;
- la plage correspondant aux fortes forces, et qui s'étend selon une asymptote horizontale correspond simplement au fait que les capacités musculaires sont limitées.

Ainsi, la dynamique sonore est encore mieux ressentie par l'utilisateur. Une telle transformation n'est cependant qu'optionnelle. On pourra également utiliser d'autres types de transformations améliorant la sensibilité, adaptées à la forme particulière de la relation entre l'enfoncement et l'effort.

L'invention est bien sûr susceptible d'un grand nombre de variantes. Par exemple, en référence à la figure 4 qui représente un contrôleur haptique analogue à celui de la figure 3, on a prévu outre l'enfoncement de la touche selon la flèche A, que la touche soit mobile latéralement selon la flèche B. Cette mobilité latérale peut être obtenue de diverses manières. On peut par exemple choisir une lame flexible 104 susceptible de gauchir légèrement d'un côté ou de l'autre lors d'une sollicitation latérale sur le haut du massif 111, de sorte à permettre un déplacement latéral (accompagné d'une légère rotation de la touche). On peut encore prévoir entre le support 103 et la lame flexible 104 une liaison pivotante autorisant un déplacement latéral de la touche 108. Pour détecter ces mouvements latéraux, il suffira de prévoir sur le contrôleur haptique un premier capteur additionnel sensible au déplacement latéral et générant un signal représentatif de ce déplacement latéral. Il peut s'agir par exemple d'un capteur inductif sensible au déplacement d'une cible montée sur la touche. On offre ainsi un deuxième contrôle commandable par le doigt qui enfonce la touche.

De la même façon on peut prévoir de monter sur le haut du massif un deuxième capteur additionnel, en l'occurrence ici un ruban 130 sensible au déplacement du doigt selon la flèche C le long du massif 111 de la touche 108 et générant un signal représentatif de la position du doigt sur le massif, ce qui offre un troisième contrôle sur la touche, toujours commandable avec le doigt qui enfonce la touche.

Sur un tel contrôleur haptique, il sera alors possible de distinguer

- L'enfoncement et donc la force avec laquelle le musicien enfonce la touche
- Le déplacement latéral et/ou la force que le musicien applique pour provoquer un mouvement latéral
- la position du doigt sur la touche.

Ainsi, un tel contrôleur haptique à touche permet un contrôle fin de plusieurs paramètres avec une action unique du doigt sur la touche, tels que par exemple la dynamique sonore du son, sa hauteur et son contenu spectral.

Un tel contrôleur haptique peut être utilisé tel quel en étant interfacé à un générateur de son pour contrôler un ou plusieurs paramètres de son. Il peut encore être intégré à divers appareils, comme par exemple à une table de mixage en remplacement d'un contrôle à potentiomètre linéaire ou rotatif.

On pourra également équiper le contrôleur haptique de l'invention d'un bouton-poussoir de mise en mémoire destiné à permettre au musicien de libérer temporairement sa main, tout en maintenant l'effet désiré. Le bouton-poussoir est interfacé avec les moyens de traitement pour maintenir le signal de sortie au niveau qui était le sien au moment de la pression sur le bouton poussoir. Le programme affecté à la gestion du signal du capteur contient une boucle sur l'état On/Off d'un bouton-poussoir (situé de préférence sur le boîtier du contrôleur haptique, de sorte que le musicien puisse l'actionner avec un autre doigt que celui qui agit sur la touche). À l'instant où le bouton-poussoir est déclenché, le programme bascule sur un mode d'interruption : il garde en mémoire la dernière valeur du capteur, ce qui permet au musicien de retirer son doigt de la touche et de libérer sa main sans que le son ne soit brutalement affecté (pas de mise à zéro du volume). Lorsque le programme détecte que la touche subit à nouveau la même valeur de force, il reprend son mode de fonctionnement normal.

Bien entendu, l'invention s'applique à des contrôleurs dont l'organe de manoeuvre est différent d'une touche.

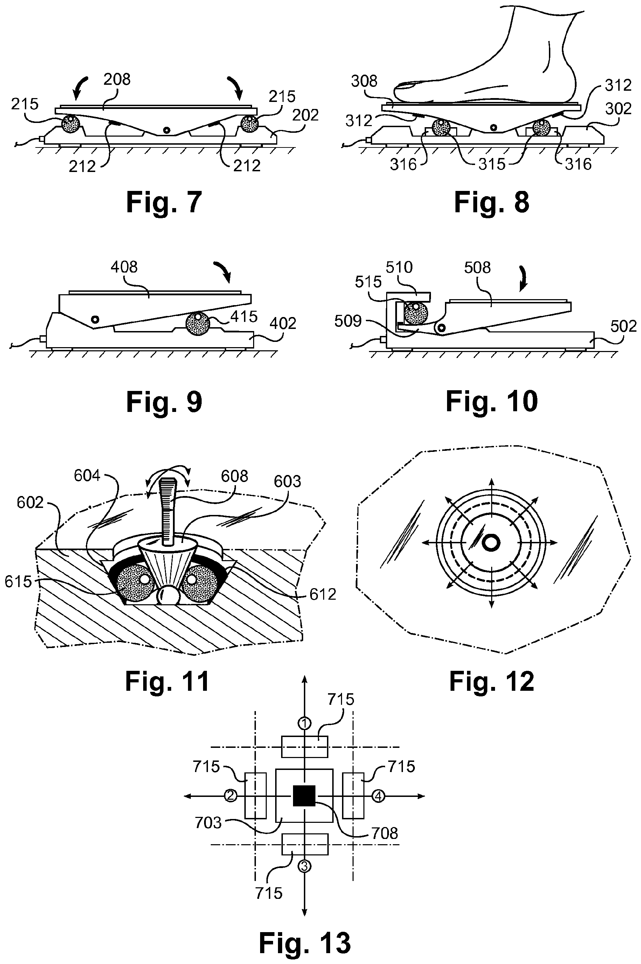

Les figures 7 à 10 illustrent des contrôleurs haptiques dont l'organe de manoeuvre est une pédale actionnable au pied. Sur la figure 7, la base 202 reçoit à articulation un organe de manoeuvre sous la forme d'une pédale 208. Les moyens de liaison mécaniques comprennent ici deux butées déformables 215 prenant comme auparavant la forme de cylindres à perçage décalé en matériau élastomère qui sont disposés de part et d'autre d'un axe d'articulation de la pédale sur la base pour opposer des efforts résistants non linéaires selon deux sens de manoeuvre de la pédale. Les capteurs utilisés ici sont des capteurs de position 212 mesurant la position angulaire de la pédale 208. Sur la figure 8, on retrouve la pédale 308 articulée sur la base 302, ainsi que les deux butées déformables en élastomère 315, qui sont ici montées sur des chariots 316 à position réglable, pour régler la force résistante qu'opposent les butées déformables à la manoeuvre de la pédale. On retrouve les capteurs de position 312. Sur la figure 9, la pédale 408 est articulée sur la base 402. Ici, le contrôleur haptique ne comporte qu'une seule butée déformable 415, la pédale 408 n'étant manoeuvrable que dans un seul sens. Enfin la figure 10 illustre un contrôleur haptique dont la pédale 508 est toujours articulée sur la base 502. Toutefois, la pédale 508 comporte une palette 509 qui s'étend au-delà de l'axe d'articulation de la pédale 508 pour coopérer avec une butée déformable 515 qui vient prendre appui sur un rebord 510 solidaire de la base 502.

L'invention s'applique encore à des contrôleurs haptiques dont l'organe de manoeuvre est un manche 608. Le manche est rotulé sur une base 602 en étant terminé par un piètement conique 603. La butée déformable 615 en matériau élastomère se présente ici sous la forme d'un tore à perçage décalé, qui peut être obtenu en formant un cylindre à perçage décalé et qui s'étend dans une cavité 604 conique creusée dans la base 602 pour coopérer avec le cône 603. A la figure 12, on voit que la manche 608 peut être déplacé dans toutes les directions radiales et subit pour chaque direction un effort résistant similaire. Un capteur sensitif 612 sous forme de nappe conique est disposé contre la paroi de la cavité 604 pour être sensible à l'effort de manoeuvre imprimé sur la manche 608, quelque soit la direction radiale de l'effort.

Sur la figure 13, en vue de dessus et selon une variante de réalisation, le manche 708 est maintenant associé à un piètement 703 pyramidal qui coopère avec quatre butées déformables 715 disposés deux à deux pour résister à des efforts de manoeuvre selon deux axes perpendiculaires.

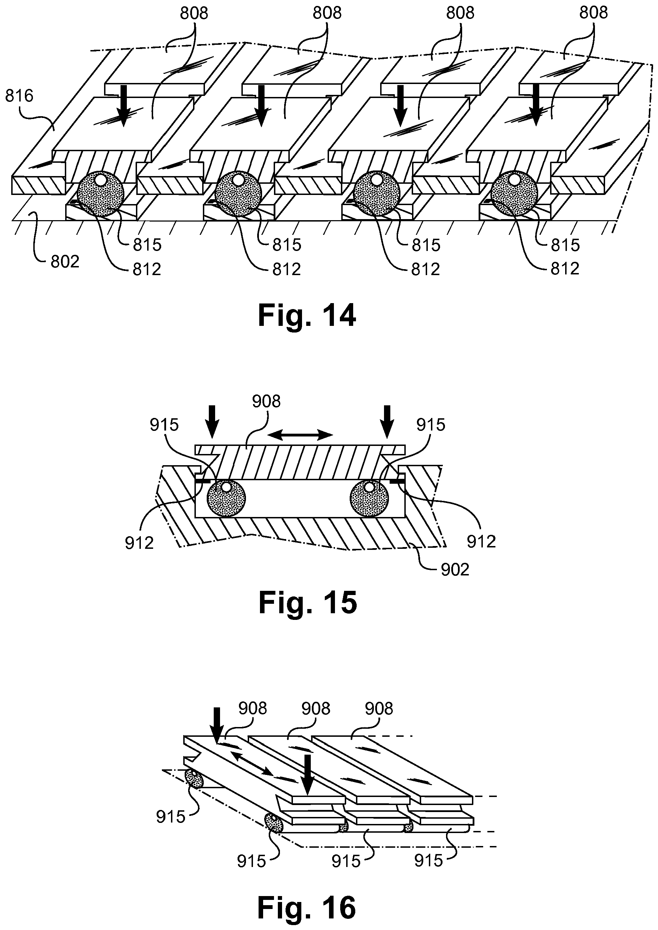

Sur la figure 14, le contrôleur haptique selon l'invention comporte une pluralité d'organes de manoeuvre sous la forme de touches 808 disposés pour former un clavier. Les touches sont positionnées et guidées par un masque 816. Des butées déformables en matériau élastomérique 808 s'étendent entre chacunes des touches 815 et une base 802. Des capteurs 812 s'étendent à proximité des butées déformables 815.

Enfin, sur les figures 15 et 16 est illustré un autre contrôleur haptique selon l'invention qui comporte une pluralité d'organes de manoeuvre sous la forme de touches 908 juxtaposées qui coopèrent avec des butées déformables en matériau élastomère se présentant ici sous la forme de cylindres à perçages décalés 915. Des capteurs 912 s'étendent à proximité des butées déformables 915 pour être sensibles à des efforts de manoeuvre exercés d'un côté ou de l'autre de chaque touche 908 (comme indiqué par les flèches).

Dans tous les exemples illustrés, les butées déformables génèrent un effort résistant non linéaire à l'encontre d'un effort d'actionnement de l'organe de manoeuvre.

L'invention n'est bien sûr pas limitée à ce qui vient d'être décrit, mais englobe toute variante entrant dans le cadre défini par les revendications.

En particulier, bien que l'on a ici illustré des contrôleurs haptiques équipés d'un capteur d'effort, tout autre capteur pourra être utilisé, du moment qu'il délivre un signal représentatif de l'effort appliqué sur l'organe de manoeuvre. En particulier, on pourra utiliser un capteur de position dont le signal est calibré pour établir une correspondance entre la position de contrôleur et l'effort résistant correspondant, par exemple par l'intermédiaire d'une table, ou d'une loi programmée. Le capteur sera équipé si besoin de l'électronique adapté à traduire ces relevés en effort appliqué sur l'organe de manoeuvre. On pourra par ailleurs utiliser un capteur de déformation (jauge de contrainte) ou encore un capteur de pression.

Bien que les moyens de liaison mécanique entre la touche et la base comprennent ici une lame métallique et une butée déformable sous la forme d'un cylindre à perçage décalé (le cas échéant mis en forme pour former un tore), on pourra utiliser d'autres moyens de liaison mécanique comportant une butée déformable en matériau élastomère, du moment que ceux-ci génèrent un effort résistant à l'actionnement de l'organe de manoeuvre qui est non-linéaire monotone, de préférence ayant au moins approximativement une allure en logarithme.

Bien que dans les exemples illustrés, les moyens de traitement sont physiquement incorporés au contrôleur haptique de l'invention, ces moyens de traitement pourront plus généralement être opérationnellement associés au contrôleur haptique, sans pour autant y être physiquement intégrés. On peut par exemple utiliser une série de contrôleur haptiques selon l'invention disposés pour constituer un clavier de touches. Les moyens de traitement seront alors avantageusement regroupés dans une unité de traitement qui sera alors commune à toutes les touches.

Enfin, il pourra exister un jeu de fonctionnement entre l'organe de manoeuvre et la butée déformable de sorte que la butée déformable ne joue son rôle qu'après accostage de la butée déformable par l'organe de manoeuvre, comme dans les exemples illustrés en figures 1 à 4. Mais la butée déformable pourra également être disposée de façon à être en permanence en appui contre l'organe de manoeuvre.

## Revendications

1. Contrôleur haptique comportant

   - une base (2;102),
   - au moins un organe de manoeuvre (8;108) monté mobile sur la base pour être déplaçable sous l'action d'un utilisateur,
   - des moyens de liaison mécanique comportant au moins une butée déformable (15) en forme de tronçon de cylindre circulaire en matériau élastomère, un perçage parallèle à un axe central du cylindre mais décalé (17) étant réalisé dans ledit cylindre, lesdits moyens de liaison s'étendant entre l'organe de manoeuvre et la base et étant adaptés à exercer un effort résistant non-linéaire monotone à l'encontre d'un effort d'actionnement de l'organe de manoeuvre, ladite butée déformable ayant un diamètre extérieur inférieur ou égal à 50 millimètres, le perçage ayant un diamètre inférieur ou égal à 30 millimètres, en laissant un écart entre une surface extérieure de la butée et le perçage inférieur ou égal à 5 millimètres,
   - au moins un capteur (12;112;312;... ; 912) placé dans le contrôleur haptique de façon à générer un signal représentatif dudit effort d'actionnement,
   - des moyens opérationnellement associés de traitement (18 ;118) du signal généré par le capteur pour délivrer un signal de sortie pour contrôler au moins une caractéristique d'un son ;

2. Contrôleur haptique selon la revendication 1, dans lequel l'organe de manoeuvre est une touche (8;108) qui s'enfonce sous l'action d'un doigt de l'utilisateur.

3. Contrôleur haptique selon la revendication 2, dans lequel les moyens de liaison mécanique comportent une lame flexible (4 ;104) ayant une première extrémité immobilisée relativement à la base, et une seconde extrémité reliée à la touche, ainsi que la butée déformable (15 ;115) disposée de sorte à venir en contact avec la touche lors de son enfoncement.

4. Contrôleur haptique selon la revendication 1, dans lequel la butée déformable est montée sur un support monté mobile (116, 316) sur la base de sorte à pouvoir modifier l'action de la butée déformable sur l'organe de manoeuvre.

5. Contrôleur haptique selon la revendication 1, dans lequel les moyens de liaison mécanique génèrent un effort résistant évoluant avec l'actionnement de sorte à présenter une première partie avec un effort résistance négligeable (A) puis une partie de faible pente (B), puis, après accostage de la butée déformable, une partie dont la pente augmente jusqu'à présenter une pente importante (C).

6. Contrôleur haptique selon la revendication 1, dans lequel les moyens de traitement et/ou le capteur génèrent un signal de sortie ($S_{out}$) sensiblement proportionnel au logarithme de l'effort appliqué à l'organe de manoeuvre, au moins dans une plage utile du signal.

7. Contrôleur haptique selon la revendication 2, comportant au moins un capteur additionnel générant un signal représentatif d'une action sur la touche autre qu'un enfoncement.

8. Contrôleur haptique selon la revendication 7, dans lequel les signaux du capteur et du capteur additionnel sont utilisés pour délivrer au moins deux signaux de sortie permettant le contrôle de deux caractéristiques d'un son.

9. Contrôleur haptique selon la revendication 8, dans lequel les moyens de liaison mécanique autorisent un mouvement latéral (B)de la touche par rapport à la base, un premier capteur additionnel générant un signal représentatif de ce mouvement latéral.

10. Contrôleur haptique selon la revendication 9, dans lequel les moyens de liaison mécanique autorisent en outre un mouvement de glissement (C) du doigt le long de l'organe de manoeuvre, un deuxième capteur additionnel générant un signal représentatif de la position du doigt le long de la touche.

11. Contrôleur haptique selon la revendication 10, dans lequel les signaux du capteur et des deux capteurs additionnels sont exploités pour contrôler trois caractéristiques sonores.

12. Contrôleur haptique selon la revendication 1, dans lequel l'organe de manoeuvre est une pédale (208;308;408;508) manoeuvrable au pied.

13. Contrôleur haptique selon la revendication 12, comportant deux butées déformables (215 ;315) disposées de part et d'autre d'un axe d'articulation de la pédale sur la base pour opposer des efforts résistants non linéaires selon deux sens de manoeuvre de la pédale.

14. Contrôleur haptique selon la revendication 1, dans lequel l'organe de manoeuvre est un manche (608) rotulé sur la base, la butée déformable comprenant un boudin formé en tore (615) s'étendant entre la base et un piètement (603)du manche.

**Patentansprüche**

1. Haptisches Steuergerät, umfassend

   - eine Basis (2; 102),
   - mindestens ein Betätigungselement (8; 108), das beweglich an der Basis gelagert ist, um unter der Einwirkung eines Nutzers verlagerbar zu sein,
   - mechanische Verbindungsmittel, die mindestens einen verformbaren Anschlag (15) in Form eines kreisförmigen Zylinderabschnittes aus Elastomer umfassen, wobei eine zur Mittelachse des Zylinders parallele, jedoch versetzte Bohrung (17) in dem genannten Zylinder ausgebildet ist, wobei sich die genannten Verbindungsmittel zwischen dem Betätigungselement und der Basis erstrecken und dazu geeignet sind, eine gleichförmige nicht-lineare Widerstandskraft entgegen einer Betätigungskraft des Betätigungselements auszuüben, wobei der genannte verformbare Anschlag einen Außendurchmesser hat, der kleiner oder gleich 50 Millimeter ist, wobei die Bohrung einen Durchmesser hat, der kleiner oder gleich 30 Millimeter ist, wodurch ein Abstand zwischen einer Außenfläche des Anschlags und der Bohrung von kleiner oder gleich 5 Millimeter gelassen wird,
   - mindestens einen Sensor (12; 112; 312; ...; 912), der derart in dem haptischen Steuergerät platziert ist, dass er ein für die genannte Betätigungskraft repräsentatives Signal erzeugt,
   - betriebsfähig verbundene Verarbeitungsmittel (18; 118) zur Verarbeitung des Signals, das von dem Sensor erzeugt wird, um ein Ausgangssignal zu liefern, um mindestens ein charakteristisches Merkmal eines Tons zu steuern.

2. Haptisches Steuergerät nach Anspruch 1, bei dem das Betätigungselement eine Taste (8; 108) ist, die unter der Einwirkung eines Fingers des Nutzers gedrückt wird.

3. Haptisches Steuergerät nach Anspruch 2, bei dem die mechanischen Verbindungsmittel einen biegsamen Streifen (4; 104) umfassen, der ein erstes Ende hat, das gegenüber der Basis unbeweglich ist, sowie ein zweites Ende, das mit der Taste verbunden ist, und auch der verformbare Anschlag (15; 115) so angeordnet ist, dass er in Kontakt mit der Taste kommt, wenn diese gedrückt wird.

4. Haptisches Steuergerät nach Anspruch 1, bei dem der verformbare Anschlag an einem Träger (116, 316) gelagert ist, der an der Basis beweglich gelagert ist, so dass die Wirkung des verformbaren Anschlags auf das Betätigungselement geändert werden kann.

5. Haptisches Steuergerät nach Anspruch 1, bei dem die mechanischen Verbindungsmittel eine Widerstandskraft erzeugen, die sich mit der Betätigung entwickelt, so dass sie einen ersten Abschnitt mit einer vernachlässigbaren Widerstandskraft (A), dann einen Abschnitt mit geringer Steigung (B) und danach nach Anlegen des verformbaren Anschlags einen Abschnitt aufweist, dessen Steigung zunimmt, bis er eine große Steigung (C) aufweist.

6. Haptisches Steuergerät nach Anspruch 1, bei dem die Verarbeitungsmittel und/oder der Sensor ein Ausgangssignal ($S_{out}$) erzeugen, das im Wesentlichen proportional zu dem Logarithmus der Kraft ist, die auf das Betätigungselement ausgeübt wird, zumindest in einem Nutzbereich des Signals.

7. Haptisches Steuergerät nach Anspruch 2, umfassend mindestens einen zusätzlichen Sensor, der ein Signal erzeugt, das repräsentativ für eine andere Einwirkung auf die Taste als ein Drücken ist.

8. Haptisches Steuergerät nach Anspruch 7, bei dem die Signale des Sensors und des zusätzlichen Sensors verwendet werden, um mindestens zwei Ausgangssignale zu liefern, die die Steuerung von zwei charakteristischen Merkmalen eines Tons ermöglichen.

9. Haptisches Steuergerät nach Anspruch 8, bei dem die mechanischen Verbindungsmittel eine seitliche Bewegung (B) der Taste relativ zur Basis gestatten, wobei ein erster zusätzlicher Sensor ein für diese seitliche Bewegung repräsentatives Signal erzeugt.

10. Haptisches Steuergerät nach Anspruch 9, bei dem die mechanischen Verbindungsmittel ferner eine Gleitbewegung (C) des Fingers entlang des Betätigungselements gestatten, wobei ein zweiter zusätzlicher Sensor ein Signal erzeugt, das für die Position des Fingers entlang der Taste repräsentativ ist.

11. Haptisches Steuergerät nach Anspruch 10, bei dem die Signale des Sensors und der beiden zusätzlichen Sensoren genutzt werden, um drei Tonmerkmale zu steuern.

12. Haptisches Steuergerät nach Anspruch 1, bei dem das Betätigungselement ein Pedal (208; 308; 408; 508) ist, das mit dem Fuß betätigbar ist.

13. Haptisches Steuergerät nach Anspruch 12, umfassend zwei verformbare Anschläge (215; 315), die zu beiden Seiten einer Gelenkverbindungsachse zur Gelenkverbindung des Pedals an der Basis angeordnet sind, um sich den nicht-linearen Widerstandskräften in zwei Betätigungsrichtungen des Pedals zu widersetzen.

**14.** Haptisches Steuergerät nach Anspruch 1, bei dem das Betätigungselement ein auf der Basis über ein Kugelgelenk gelagerter Steuerhebel (608) ist, wobei der verformbare Anschlag eine torusförmige Wulst (615) umfasst, die sich zwischen der Basis und einem Fuß (603) des Steuerhebels erstreckt.

## Claims

**1.** A haptic controller having

- a base (2;102),
- at least one maneuverable component (8;108) mounted so as to be able to move on the base in order to be able to be moved under the action of a user,
- mechanical connecting means having at least one deformable stop (15) in the form of a circular cylindrical section made of elastomeric material, a bore that is parallel to a central axis of the cylinder but offset (17) being made in said cylinder, said connecting means extending between the maneuverable component and the base and are suited to exerting a monotonous nonlinear resistive force counter to an actuating force from the maneuverable component, said deformable stop having an external diameter of less than or equal to 50 millimeters, the bore having a diameter of less than or equal to 30 millimeters, leaving a gap between an outer surface of the stop and the bore of less than or equal to 5 millimeters,
- at least one sensor (12;112;312;...;912) placed in the haptic controller so as to generate a signal which is representative of said actuating force,
- operationally linked processing means (18;118) for the signal generated by the sensor in order to deliver an output signal for controlling at least one characteristic of a sound.

**2.** The haptic controller as claimed in claim 1, in which the maneuverable component is a key (8;108) that is pressed under the action of a finger of the user.

**3.** The haptic controller as claimed in claim 2, in which the mechanical connecting means have a flexible strip (4;104) having a first end that is immobilized relative to the base and a second end that is connected to the key, as well as the deformable stop (15;115) disposed so as to come into contact with the key when it is pressed.

**4.** The haptic controller as claimed in claim 1, in which the deformable stop is mounted on a support that is mounted so as to be able to move (116, 316) on the base so as to be able to modify the action of the deformable stop on the maneuverable component.

**5.** The haptic controller as claimed in claim 1, in which the mechanical connecting means generate a resistive force that progresses with the actuation so as to exhibit a first portion with a negligible resistive force (A) followed by a portion with a slight slope (B) and then, after the deformable stop has been reached alongside, a portion whose slope increases until it exhibits a sizable slope (C).

**6.** The haptic controller as claimed in claim 1, in which the processing means and/or the sensor generate an output signal ($S_{out}$) that is substantially proportional to the logarithm of the force applied to the maneuverable component, at least in a useful range of the signal.

**7.** The haptic controller as claimed in claim 2, having at least one additional sensor that generates a signal that is representative of an action on the key other than pressing.

**8.** The haptic controller as claimed in claim 7, in which the signals from the sensor and from the additional sensor are used in order to deliver at least two output signals that allow the control of two characteristics of a sound.

**9.** The haptic controller as claimed in claim 8, in which the mechanical connecting means authorize a lateral movement (B) of the key relative to the base, a first additional sensor generating a signal that is representative of this lateral movement.

**10.** The haptic controller as claimed in claim 9, in which the mechanical connecting means authorize, moreover, a sliding movement (C) by the finger along the maneuverable component, a second additional sensor generating a signal that is representative of the position of the finger along the key.

**11.** The haptic controller as claimed in claim 10, in which the signals from the sensor and from the two additional sensors are used in order to control three sound characteristics.

**12.** The haptic controller as claimed in claim 1, in which the maneuverable component is a pedal (208;308;408;508) that can be maneuvered with the foot.

**13.** The haptic controller as claimed in claim 12, having two deformable stops (215;315) that are disposed on either side of a pin articulating the pedal to the base in order to oppose nonlinear resistive forces in two directions of maneuver of the pedal.

**14.** The haptic controller as claimed in claim 1, in which the maneuverable component is a joystick (608) swivel-jointed to the base, the deformable stop comprising a toroidally shaped roll (615) extending between the base and a footing (603) of the joystick.

**Fig. 1**

**Fig. 2**

**Fig. 3**

**Fig. 6**

**Fig. 4**

**Fig. 5**

**Fig. 7**

**Fig. 8**

**Fig. 9**

**Fig. 10**

**Fig. 11**

**Fig. 12**

**Fig. 13**

13

**Fig. 14**

**Fig. 15**

**Fig. 16**

**EP 2 907 130 B1**

## RÉFÉRENCES CITÉES DANS LA DESCRIPTION

**Documents brevets cités dans la description**

- US 20110061518 A